# EUROPEAN PATENT APPLICATION

(11) **EP 4 629 300 A1**
(43) Date of publication of application: **08.10.2025**
(21) Application number: 24904001.5
(22) Date of filing: 12.11.2024
(51) Int. Cl.: H01M 4/04, B05C 5/02, B05C 11/10, H04N 7/18, G05D 16/20

(54) **ELECTRODE COATING APPARATUS AND ELECTRODE COATING METHOD USING SAME**

(30) Priority: 14.12.2023 KR 20230182386
(71) Applicant: LG Energy Solution, Ltd., Seoul 07335 (KR)
(72) Inventor: SHIN, Dong Wook, Daejeon 34122 (KR); NAM, Moon Woo, Daejeon 34122 (KR); WI, Kyung Jin, Daejeon 34122 (KR)
(74) Representative: BCKIP Part mbB
(86) International application number: PCT/KR2024/017876
(87) International publication number: WO 2025/127435

(57) **Abstract**

Disclosed are an electrode coating apparatus including a roller configured to move an electrode current collector, a slurry spraying unit located in the vicinity of the roller, the slurry spraying unit being configured to supply an active material to one surface of the electrode current collector, a first chamber located on one side of the slurry spraying unit, the first chamber being configured to form negative pressure, a second chamber located between the slurry spraying unit and the first chamber, a predetermined area of the second chamber being located under the first chamber, and a pressure reducing member configured to form negative pressure in the first chamber, wherein at least one partition wall is in the first chamber, and an electrode coating method using the same.

## Description

### [Technical Field]

This application claims the benefit of priority to Korean Patent Application No. 2023-0182386 filed on December 14, 2023, the disclosure of which is incorporated herein by reference in its entirety.

The present invention relates to an electrode coating apparatus and an electrode coating method using the same, and more particularly to an electrode coating apparatus for applying an active material to an electrode current collector to form a coating layer and an electrode coating method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

An electrode process of manufacturing a positive electrode and a negative electrode of a secondary battery includes a mixing process of mixing raw materials, a coating process of applying a mixed slurry to an electrode current collector and drying the same, and a rolling process of allowing an electrode to pass between two rolls to press the slurry while flattening the slurry.

In particular, the coating process is a process of applying a slurry including an active material to the electrode current collector and drying the same to form an electrode, which plays a very important role in the electrochemical characteristics and performance of the battery.

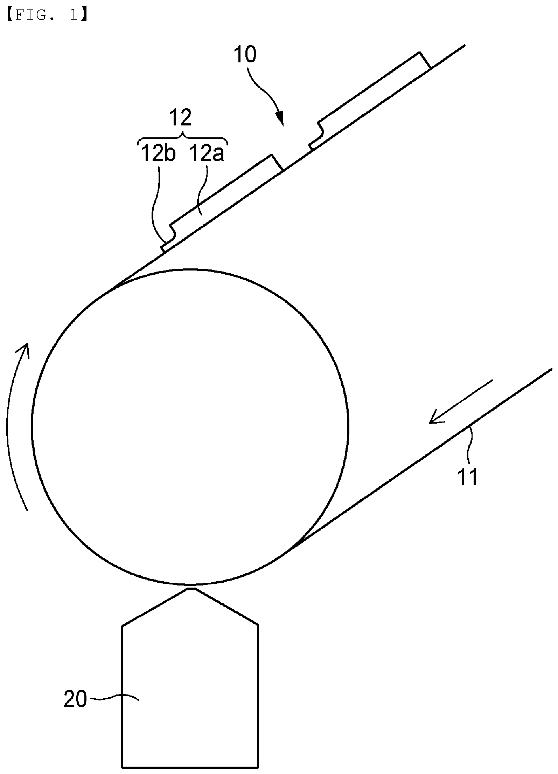

FIG. 1 is a view illustrating that a slurry is applied to an electrode current collector using a conventional electrode coating apparatus.

Referring to FIG. 1, in order to manufacture an electrode 10, a slurry spraying unit 20 sprays a slurry onto one surface of an electrode current collector 11 to form a coating layer 12.

However, when so-called pattern coating is performed such that the coating layer 12 is formed on the electrode current collector 11 at predetermined intervals, an inclined portion 12b is formed outside a flat portion 12a at the end of each coating layer 12 due to the viscosity of the slurry and surface tension, etc.

The inclined portion 12b affects battery performance due to high resistance and tab detachment caused by defects upon tab fusion in a post-process.

### (Prior Art Document)

(Patent Document 1) Korean Registered Patent Publication No. 10-2040511

### [Disclosure]

### [Technical Problem]

The present invention has been made in view of the above problems, and it is an object of the present invention to provide an electrode coating apparatus capable of reducing the electrode defect rate by ensuring that a coating layer is constituted only by a flat portion having a constant thickness during a coating process or by minimizing the length of an inclined portion even if the inclined portion is formed and an electrode coating method using the same.

### [Technical Solution]

As a technical means for achieving the above object, an electrode coating apparatus according to an embodiment of the present invention includes a roller (100) configured to move an electrode current collector (11), a slurry spraying unit (200) located in the vicinity of the roller (100), the slurry spraying unit being configured to supply an active material to one surface of the electrode current collector (11), a first chamber (300) located on one side of the slurry spraying unit (200), the first chamber being configured to form negative pressure, a second chamber (400) located between the slurry spraying unit (200) and the first chamber (300), a predetermined area of the second chamber being located under the first chamber (300), and a pressure reducing member (500) configured to form negative pressure in the first chamber (300), wherein at least one partition wall (360) is in the first chamber (300).

Also, in the electrode coating apparatus according to the embodiment of the present invention, the first chamber (300) may be spaced apart from the slurry spraying unit (200) by a predetermined distance, and the second chamber (400) may be in contact with one side surface of the slurry spraying unit (200).

Also, in the electrode coating apparatus according to the embodiment of the present invention, the first chamber (300) may include a first plate (310), a second plate (320) extending upward from an edge of a front surface of the first plate (310), a third plate (330) extending upward from an edge of a rear surface of the first plate (310), a pair of fourth plates (340) extending upward from edges of both side surfaces of the first plate (310), and a fifth plate (350) configured to connect the second plate (320) to the pair of the fourth plates (340), and the second plate (320) may include a plurality of exhaust pipes (321) communicating with the pressure reducing member (500).

Also, in the electrode coating apparatus according to the embodiment of the present invention, the at least one partition wall (360) may comprise two or more partition walls fixed to the first plate (310), and the exhaust pipes (321) may be located between the respective two or more partition walls (360) and/or between at least one of the two or more partition walls (360) and the fourth plate (340) so as not to overlap the two or more partition walls (360).

Also, in the electrode coating apparatus according to the embodiment of the present invention, an upper end of each of the two or more partition walls (360) may be spaced apart from the fifth plate (350) by a predetermined distance.

Also, in the electrode coating apparatus according to the embodiment of the present invention, a front surface of each of the two or more partition walls (360) may be spaced apart from the second plate (320) by a predetermined distance.

Also, in the electrode coating apparatus according to the embodiment of the present invention, the fifth plate (350) may include a 5a plate (351) connecting the second plate (320) to the pair of fourth plates (340) and a 5b plate (352) connected to the 5a plate (351) so as to be movable forward or rearward.

Also, in the electrode coating apparatus according to the embodiment of the present invention, the second chamber (400) may have a box-shaped structure with an open top, and a discharge pipe on a bottom of the second chamber may be configured to discharge an active material.

Also, in the electrode coating apparatus according to the embodiment of the present invention, the second chamber (400) may include a 2a chamber (410) and a 2b chamber (420), a bottom surface of each of the 2a chamber and the 2b chamber being inclined.

Also, in the electrode coating apparatus according to the embodiment of the present invention, the discharge pipe may include a 2a discharge pipe (411) in the 2a chamber (410) and a 2b discharge pipe (421) in the 2b chamber (420), each of the 2a discharge pipe (411) and the 2b discharge pipe (421) being at the lowest position of the bottom surface of a corresponding one of the 2a chamber (410) and the 2b chamber (420).

Also, the electrode coating apparatus according to the embodiment of the present invention may further include an image capturing unit (600) located in the vicinity of the roller (100), the image capturing unit being configured to capture an image of one surface of the electrode current collector (11) that has passed through the slurry spraying unit (200), and a controller (700) configured to adjust the negative pressure in the vacuum chamber (300) based on information received from the image capturing unit (600).

Also, in the electrode coating apparatus according to the embodiment of the present invention, the pressure reducing member (500) may include a suction member (510) configured to generate the negative pressure and a valve (520) between the suction member (510) and the exhaust pipe (321), and the controller (700) may be configured to adjust at least one of the output of the suction member (510) and the opening and closing angle of the valve (520).

In addition, an electrode coating method using the electrode coating apparatus according to the embodiment of the present invention includes (S1) forming a predetermined level of negative pressure in the first chamber (300), (S2) spraying an active material to one surface of the electrode current collector (11) to form a coating layer (12), (S3) capturing an image of the coating layer (12) formed on the electrode current collector (11), and (S4) transmitting information from the image capturing unit (600) to the controller.

Also, the electrode coating method according to the embodiment of the present invention may further include (S5) adjusting the negative pressure in the first chamber (300) based on the information transmitted from the image capturing unit (600).

Also, in the electrode coating method according to the embodiment of the present invention, the information in step (S5) may be information of an inclined portion (12b) forming the coating layer (12).

### [Advantageous Effects]

As is apparent from the above description, in an electrode coating apparatus according to the present invention and an electrode coating method using the same, a first chamber configured to form negative pressure is provided on one side of a slurry spraying unit such that a coating layer is constituted only by a flat portion or the length of an inclined portion can be minimized, whereby it is possible to reduce the electrode defect rate.

Also, in the electrode coating apparatus according to the present invention and the electrode coating method using the same, a plurality of partition walls is provided in the chamber, and upper parts and front surfaces of the partition walls communicate with each other, whereby it is possible to minimize the negative pressure deviation in the chamber.

Furthermore, in the electrode coating apparatus according to the present invention and the electrode coating method using the same, a bottom surface of a second chamber configured to receive a slurry removed by the negative pressure is inclined, whereby it is possible to quickly discharge the removed slurry.

### [Description of Drawings]

FIG. 1 is a view illustrating that a slurry is applied to an electrode current collector using a conventional electrode coating apparatus.
FIG. 2 is a schematic view illustrating an electrode coating apparatus according to the present invention.
FIG. 3 is a perspective view showing the state in which a roller, a slurry spraying unit, a first chamber, and a second chamber are coupled to each other in the electrode coating apparatus according to the present invention.
FIG. 4 is a perspective view of the electrode coating apparatus shown in FIG. 3 when viewed in the other direction.
FIG. 5 is an exploded perspective view of the electrode coating apparatus shown in FIG. 3.
FIG. 6 is a side view of the electrode coating apparatus shown in FIG. 3.
FIG. 7 is a front view of the electrode coating apparatus shown in FIG. 3.
FIG. 8 is a perspective view showing the state in which the slurry spraying unit, the first chamber, and the second chamber are coupled to each other in the electrode coating apparatus according to the present invention.
FIG. 9 is a perspective view showing the state in which the first chamber and the second chamber are coupled to each other in the electrode coating apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

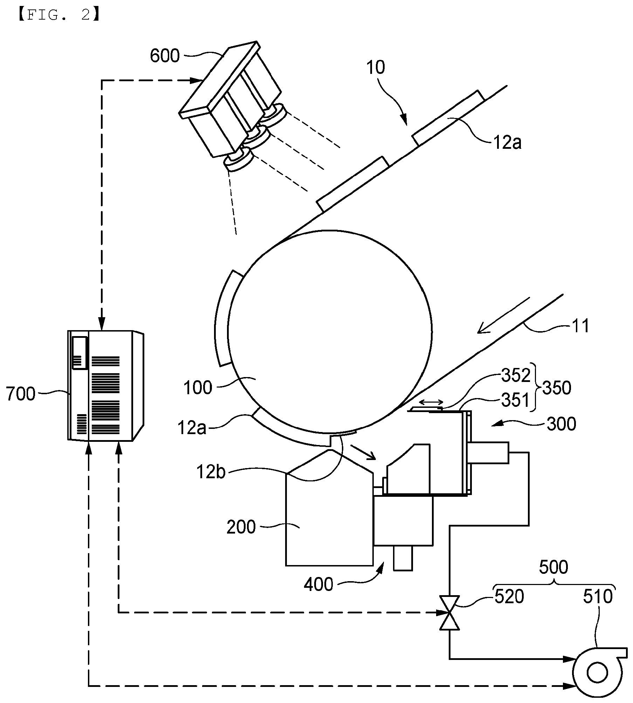

Also, in the drawing, a forward direction means a direction in which a slurry spraying unit 200 faces a first chamber 300 (a 3 o'clock direction in FIG. 2), and a rearward direction is a direction in which the first chamber 300 faces the slurry spraying unit 200 (a 9 o'clock direction in FIG. 2).

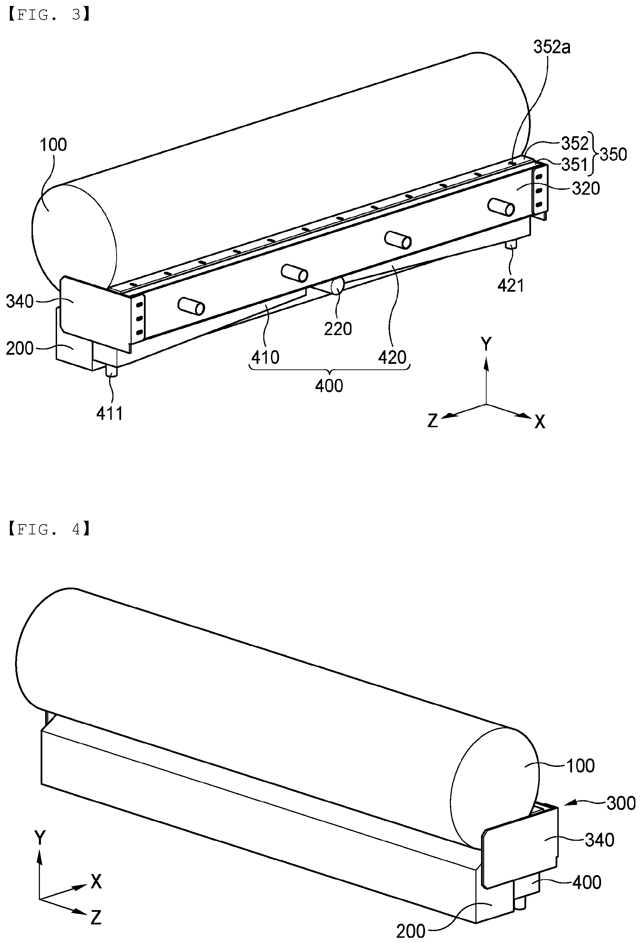

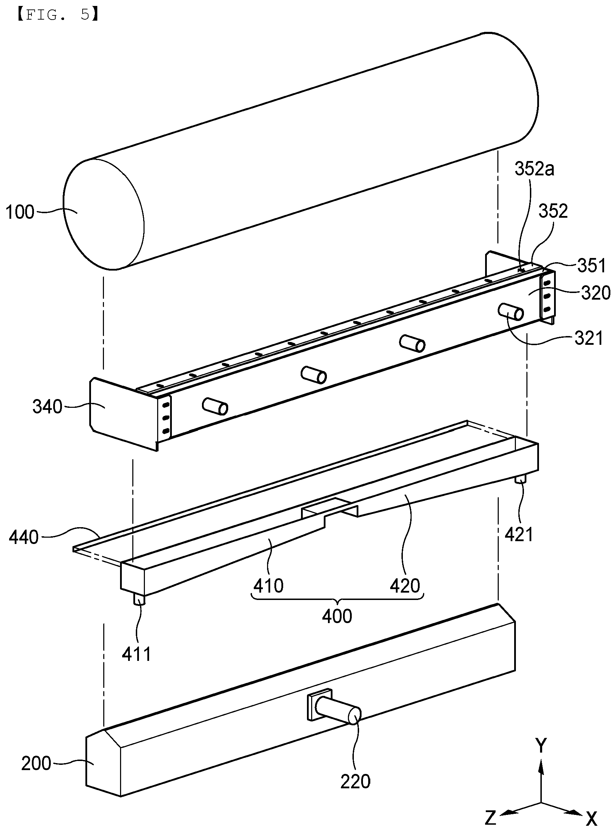

Hereinafter, an electrode coating apparatus according to the present invention will be described. FIG. 2 is a schematic view illustrating an electrode coating apparatus according to the present invention, FIG. 3 is a perspective view showing the state in which a roller, a slurry spraying unit, a first chamber, and a second chamber are coupled to each other in the electrode coating apparatus according to the present invention. In addition, FIG. 4 is a perspective view of the electrode coating apparatus shown in FIG. 3 when viewed in the other direction, and FIG. 5 is an exploded perspective view of the electrode coating apparatus shown in FIG. 3.

As shown in FIGs. 2 to 5, the electrode coating apparatus of the present invention, which is an apparatus for forming a coating layer 12 on an electrode current collector 11 to manufacture an electrode 10, includes a roller 100, a slurry spraying unit 200, a first chamber 300, a second chamber 400, a pressure reducing member 500, an image capturing unit 600, and a controller 700.

First, the electrode 10 may be a positive electrode or a negative electrode, and each of the positive electrode and the negative electrode may include an electrode current collector 11 and a coating layer 12 provided on one surface of the electrode current collector 11.

Meanwhile, a positive electrode current collector constituting the positive electrode is mainly made of aluminum, and a slurry mixture of a positive electrode active material and a binder is applied to the positive electrode current collector.

For example, a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

In addition, a negative electrode current collector constituting the negative electrode is mainly made of copper, and a slurry mixture of a negative electrode active material and a binder is applied to the negative electrode current collector. For example, carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof, may be used as the negative electrode active material; however, the present invention is not limited thereto.

Each of the positive electrode current collector and the negative electrode current collector has a coated portion with an active material applied and an uncoated portion without an active material applied, and the uncoated portion is generally notched to form an electrode. The positive electrode and the negative electrode are known, and therefore a detailed description thereof will be omitted.

The roller 100 may be configured to move the electrode current collector 11. In other words, the roller 100 is in contact with the other surface of the electrode current collector 11, and may support the electrode current collector 11 so as to be continuously moved.

At this time, the roller 100 may provide a moving direction for the electrode current collector 11 such that the electrode current collector is moved by the rotational force of an electrode roller configured to wind the electrode 10 on which the coating layer 12 is formed as the result of the active material being applied to the electrode current collector 11.

The slurry spraying unit 200 is located in the vicinity of the roller 100 to supply a slurry to one surface of the electrode current collector 11. The slurry spraying unit 200 may include a nozzle portion 210 configured to supply a slurry to one surface of an electrode current collector 11 that is moved by the roller 100.

The nozzle portion 210 may apply a slurry supplied from a slurry storage tank (not shown) to one surface of the electrode current collector 11 to form the coating layer 12 on the electrode current collector 11.

Here, the slurry spraying unit 200 may continuously supply a slurry to one surface of the electrode current collector 11 through the nozzle portion 210 to form a continuous coating layer 12, and if necessary, the slurry spraying unit may also intermittently supply a slurry to one surface of the electrode current collector 11 to form a patterned coating layer 12.

The slurry spraying unit 200 having the nozzle portion 210 is known in the art to which the present invention pertains, and therefore a detailed description thereof will be omitted.

In addition, the slurry spraying unit 200 may further include a protruding member 220 extending forward from a front surface thereof (a 3 o'clock direction in FIG. 3) by a predetermined length so as to support the first chamber 300 and the second chamber 400, which will be described later in detail.

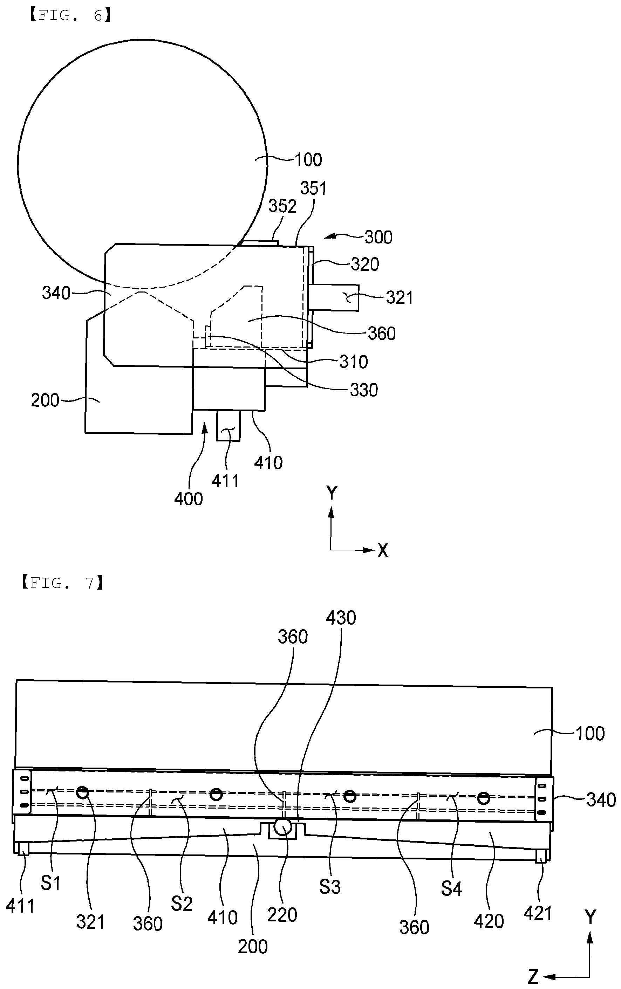

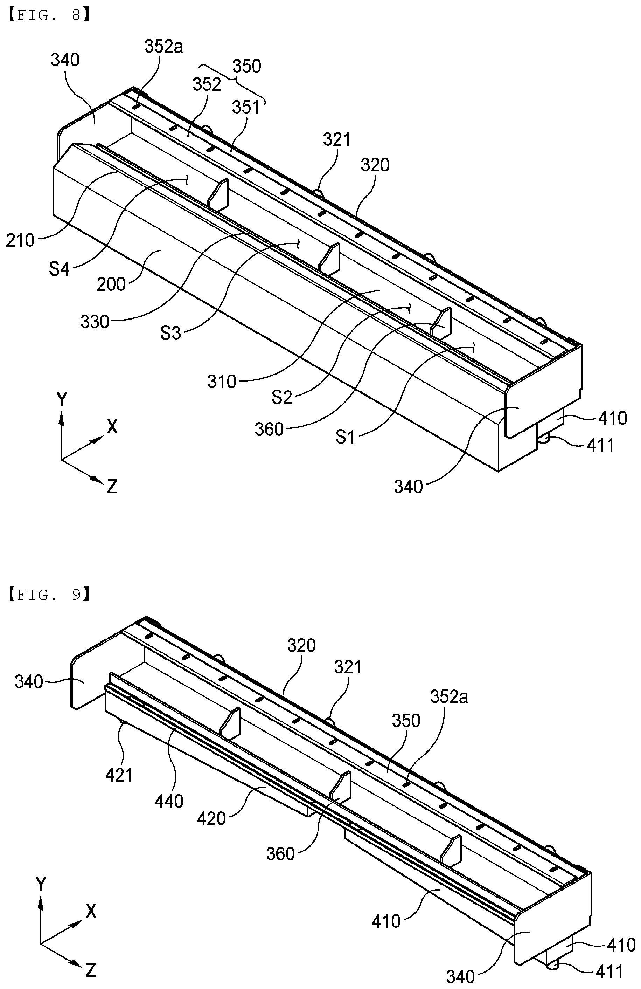

FIG. 6 is a side view of the electrode coating apparatus shown in FIG. 3, and FIG. 7 is a front view of the electrode coating apparatus shown in FIG. 3. In addition, FIG. 8 is a perspective view showing the state in which the slurry spraying unit, the first chamber, and the second chamber are coupled to each other in the electrode coating apparatus according to the present invention, and FIG. 9 is a perspective view showing the state in which the first chamber and the second chamber are coupled to each other in the electrode coating apparatus according to the present invention.

Referring to FIGs. 2 and 5 to 9, the first chamber 300 is located on one side of the slurry spraying unit 200 (a 3 o'clock direction in FIG. 6) to form negative pressure such that the entirety of the coating layer is flat.

The first chamber 300 may include a first plate 310, a second plate 320, a third plate 330, a fourth plate 340, and a fifth plate 350. More specifically, the first plate 310 may be a lower surface of the first chamber 300 (a 6 o'clock direction in FIG. 6), the second plate 320 may be a front surface of the first chamber 300 (a 3 o'clock direction in FIG. 6), the third plate 330 may be a rear surface of the first chamber 300 (a 9 o'clock direction in FIG. 6), the fourth plate 340 may be a pair of side surfaces of the first chamber 300 (3 and 9 o'clock directions in FIG. 7), and the fifth plate 330 may be an upper surface of the first chamber 300 (a 12 o'clock direction in FIG. 6).

The first plate 310 may be configured as the lower surface of the first chamber 300, and may be spaced apart from the slurry spraying unit 200 by a predetermined distance.

The second plate 320 may extend upward from the edge of a front surface of the first plate 310. In addition, the third plate 330 may extend upward from the edge of a rear surface of the first plate 310. At this time, the third plate 330 may extend so as to have a smaller length than the upwardly extending length of the second plate 320.

The fourth plate 340 may be configured as a pair of plates extending upward from the edges of both side surfaces of the first plate 310.

In addition, the pair of fourth plates 340 may extend from the edges of both side surfaces of the second plate 320 toward the slurry spraying unit 200 so as to at least partially cover both side surfaces of the slurry spraying unit 200 and the roller 100. The pair of fourth plates 340 may serve as screens capable of preventing a slurry from spattering sideways when the slurry spraying unit 200 supplies the slurry to one surface of the electrode current collector 11.

The fifth plate 350 may connect the second plate 320 to the pair of the fourth plates 240. The fifth plate 350 may extend from the second plate 320 toward the slurry spraying unit 200, and may extend only by a predetermined length so as not to come into contact with the roller 100.

In addition, the fifth plate 350 includes a 5a plate 351 and a 5b plate 352. The 5a plate 351 may be configured to connect the second plate 320 to the pair of fourth plates 340, and the 5b plate 352 may connected to the 5a plate 351 so as to be movable forward or rearward.

A plurality of holes 352a in a long hole shape may be formed in the 5b plate 352. The plurality of holes 352a may be configured to allow connecting members (not shown) configured to interconnect the 5a plate 351 and the 5b plate 352 to extend therethrough.

In addition, the plurality of holes 352a may be configured to allow the 5b plate to be moved forward or rearward relative to the connecting members (not shown) therethrough. That is, the plurality of holes 352a may be formed such that the distance between a rear surface of the 5b plate 352 and the roller 100 can be adjusted.

For example, the 5b plate 352 may slide from the 5a plate 351 according to the thickness of the electrode current collector 11 that is moved through the gap between the 5b plate 352 and the roller 100 to adjust the distance between the 5b plate 352 and the roller 100. The 5b plate 352 may slide from the 5a plate 351 by the extending length of the hole 352a in the long hole shape.

The 5b plate 352 may slide according to the thickness of the electrode current collector 11 to adjust the distance between the 5b plate 352 and the roller 100, whereby the negative pressure formed in the first chamber 300 may be maximized.

Meanwhile, it is preferable for one or more partition walls 360 to be provided in the first chamber 300, and it is more preferable for two or more partition walls 360 to be fixed to the first plate 310. For example, when three partition walls 360 are provided, an inner space of the first chamber 300 may be separated into four space portions S1, S2, S3, and S4.

At this time, an upper end of each partition wall 360 is spaced apart from the fifth plate 350 by a predetermined distance, and a front surface of the partition wall is also spaced apart from the second plate 320. Consequently, the partition walls 360 divide the inner space of the first chamber 300 into the first space portion S1, the second space portion S2, the third space portion S3, and the fourth space portion S4, and the space portions communicate with each other.

For example, each partition wall 360 may be disposed such that a rear surface of the partition wall is in contact with the third plate 330, and the upper end and the front surface of the partition wall may be spaced apart respectively from the fifth plate 350 and the second plate 320 by a predetermined distance.

In addition, a corner part of the upper end of each partition wall 360, which is formed in the shape of a quadrangular plate, extending toward the roller 100 may be cut at an angle. At this time, the corner part may be cut in the form of a straight line or a curve. For example, a part of the partition wall 360 may be cut such that the moving electrode current collector 11 is not damaged.

In addition, the second plate 320 of the first chamber 300 is provided with an exhaust pipe 321, and the exhaust pipe 321 may be provided in plural so as to communicate with the pressure reducing member 500.

The exhaust pipes 321 may be located between the respective partition walls 360 and/or between the partition wall 360 and the fourth plate 340 so as not to overlap the partition walls 360. For example, the exhaust pipes 321 may be disposed in the first space portion S1, the second space portion S2, the third space portion S3, and the fourth space portion S4 formed by the partition wall 360.

Accordingly, the exhaust pipes 321 may be disposed respectively in the first space portion S1, the second space portion S2, the third space portion S3, and the fourth space portion S4, whereby it is possible to reduce the negative pressure deviation between the space portions.

Furthermore, since the upper ends and the front surfaces of the partition walls 360 communicate with even if the plurality of partition walls 360 is provided, the inner pressures of the first space portion S1 to the fourth space portion S4 may be adjusted to be the same or similar, i.e., the inner pressure of the first chamber 300 may be adjusted to be uniform.

The second chamber 400 may be located between the slurry spraying unit 200 and the first chamber 300, and a predetermined area of the second chamber may be located under the first chamber 300. More specifically, the first chamber 300 may be spaced apart from the slurry spraying unit 200 by a predetermined distance, whereas the second chamber 400 may be in contact with one side surface of the slurry spraying unit 200.

The second chamber 400 may include a pair of a 2a chamber 410 and a 2b chamber 420 and may have a box-shaped structure with an open top. For example, the top of the second chamber 400 is open by the distance between the first chamber 300 and the slurry spraying unit 200, and a slurry corresponding to an inclined portion is received through the open area.

In other words, the slurry that is received in the second chamber 400 is the slurry that is removed by the negative pressure that the first chamber 300 forms when the slurry spraying unit 200 supplies the slurry to the electrode current collector 11.

Meanwhile, it is preferable for a bottom surface of each of the pair of the 2a chamber 410 and the 2b chamber 420 to be inclined, and it is preferable for a discharge pipe configured to discharge a slurry to be provided on the bottom of each of the 2a chamber 410 and the 2b chamber 420.

Here, the discharge pipe may include a 2a discharge pipe 411 and a 2b discharge pipe 412, wherein the 2a discharge pipe 411 may be provided in the 2a chamber 410, and the 2b discharge pipe 412 may be provided in the 2b chamber 420.

Each of the 2a discharge pipe 411 and the 2b discharge pipe 421 may be provided at the lowest position of the bottom surface of a corresponding one of the 2a chamber 410 and the 2b chamber 420. For example, when the bottom surfaces of the 2a chamber 410 and the 2b chamber 420 are inclined so as to be gradually lower toward the outside (a 9 o'clock direction for the 2a chamber a 3 o'clock direction for the 2b chamber in FIG. 7), the 2a discharge pipe 411 and the 2b discharge pipe 421 may be provided on the bottom surfaces of the 2a chamber 410 and the 2b chamber 420 facing the outside, respectively.

As such, the bottom surface of the second chamber 400 that receives the removed slurry is inclined and the discharge pipe is provided thereon, the removed slurry may be quickly discharged to the outside before hardening.

The second chamber 400 may include a connecting portion 430 configured to connect the 2a chamber 410 and the 2b chamber 420 to each other. The connecting portion 430 may be configured to connect the highest positions of the bottom surfaces of the 2a chamber 410 and the 2b chamber 420 to each other, and may be provided in an upper side thereof with a recess. For example, the recess may be configured to allow the protruding member 220 provided on the slurry spraying unit 200 to be seated therein, and therefore the second chamber 400 and the slurry spraying unit 200 may be connected to each other.

In addition, a tight contact member 440 may be further disposed on the other surface of the second chamber 400 in contact with one side surface of the slurry spraying unit 200. For example, the tight contact member 440 may be configured to prevent the occurrence of a gap between the slurry spraying unit 200 and the second chamber 400.

The pressure reducing member 500 may include a suction member 510 configured to generate negative pressure and a valve 520 provided between the suction member 510 and the exhaust pipe 321, and may be configured to form negative pressure in the first chamber 300. For example, the suction member 510 may be a known suction means that causes the interior of the first chamber 300 to be under negative pressure, such as a vacuum pump.

The valve 520 may be configured to finely adjust the negative pressure of the suction member 510 according to the opening and closing angle thereof.

In addition, the pressure reducing member 500 may be connected to each of the plurality of exhaust pipes 321 to form negative pressure in the inner space of the first chamber 300. In other words, the pressure reducing member 500 may be connected to the plurality of exhaust pipes 321 disposed in the first space portion S1, the second space portion S2, the third space portion S3, and the fourth space portion S4 to adjust the negative pressure in each of the space portions such that the negative pressure in the first chamber 300 is uniform.

The image capturing unit 600 may be located in the vicinity of the roller 100 to capture an image of one surface of the electrode current collector 11 that has passed through the slurry spraying unit 200. In other words, the image capturing unit 600 may capture an image of one surface of the electrode current collector 11 on which the coating layer 12 has been formed by the slurry spraying unit 200 and may transmit captured information to the controller 700.

In addition, the controller 700 may adjust at least one of the output of the suction member 510 and the opening and closing angle of the valve 520 based on the received information to adjust the negative pressure in the first chamber 300.

In other words, the controller 700 may receive information about the presence and length of an inclined portion 12b of the coating layer 12 obtained as the result of the image capturing unit 600 capturing an image of one surface of the electrode current collector 11 on which the coating layer 12 has been formed by the slurry spraying unit 200 in real time, and may control the pressure reducing member 500 based on the received information.

For example, if the inclined portion 12b is formed on one side of a flat portion 12a or if the inclined portion 12b is formed longer than a predetermined length, the controller 700 may adjust the output of the suction member 510 or the opening and closing angle of the valve 520 from the information received from the image capturing unit 600 to increase the negative pressure in the first chamber 300 such that the inclined portion 12b is completely removed or reduced.

In order for the controller 700 to control the pressure reducing member 500 in real time, it is preferable for the image capturing unit 600 to continuously capture images of one surface of the electrode current collector 11 that has passed through the slurry spraying unit 200, and it is also possible to capture images at set intervals.

The controller 700 may be implemented in the form of hardware, in the form of software, or in a combined form of hardware and software. The controller may be implemented in the form of a computing device (an arithmetic device) such as a microprocessor, but is not limited thereto, and may be implemented in any of various forms that are obvious to those skilled in the art.

Next, a method of coating an electrode current collector using the electrode coating apparatus according to the present invention will be described with reference to FIGs. 2 to 9.

The electrode coating method according to the present invention includes (S1) a step of forming a predetermined level of negative pressure in the first chamber 300, (S2) a step of spraying an active material to one surface of an electrode current collector 11 to form a coating layer 12, (S3) a step of capturing an image of the coating layer 12 formed on the electrode current collector 11, (S4) a step of transmitting information from the image capturing unit 600 to the controller, and (S5) a step of adjusting the negative pressure in the first chamber 300 based on the information transmitted from the image capturing unit 600.

Here, the information in step (S5) may be information of an inclined portion 12b forming the coating layer 12.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

10: Electrode
11: Electrode current collector 12: Coating layer
12a: Flat portion 12b: Inclined portion
100: Roller
200: Slurry spraying unit
210: Nozzle portion 220: Protruding member
300: First chamber
310: First plate
320: Second plate 321: Exhaust pipe
330: Third plate
340: Fourth plate
350: Fifth plate
351: 5a plate
352: 5b plate 352a: Hole
360: Partition wall
400: Second chamber
410: 2a chamber 411: 2a discharge pipe
420: 2b chamber 421: 2b discharge pipe
430: Connecting portion 440: Tight contact member
500: Pressure reducing member
510: Suction member 520: Valve
600: Image capturing unit
700: Controller
S1: First space portion S2: Second space portion
S3: Third space portion S4: Fourth space portion

## Claims

1. An electrode coating apparatus comprising:
a roller configured to move an electrode current collector;
a slurry spraying unit located in the vicinity of the roller, the slurry spraying unit being configured to supply an active material to one surface of the electrode current collector;
a first chamber located on one side of the slurry spraying unit, the first chamber being configured to form negative pressure;
a second chamber located between the slurry spraying unit and the first chamber, a predetermined area of the second chamber being located under the first chamber; and
a pressure reducing member configured to form negative pressure in the first chamber, wherein
at least one partition wall is in the first chamber.

2. The electrode coating apparatus according to claim 1, wherein
the first chamber is spaced apart from the slurry spraying unit by a predetermined distance, and
the second chamber is in contact with one side surface of the slurry spraying unit.

3. The electrode coating apparatus according to claim 1, wherein
the first chamber comprises a first plate, a second plate extending upward from an edge of a front surface of the first plate, a third plate extending upward from an edge of a rear surface of the first plate, a pair of fourth plates extending upward from edges of both side surfaces of the first plate, and a fifth plate configured to connect the second plate to the pair of the fourth plates, and
the second plate includes a plurality of exhaust pipes communicating with the pressure reducing member.

4. The electrode coating apparatus according to claim 3, wherein
the at least one partition wall comprises two or more partition walls fixed to the first plate, and
the exhaust pipes are located between the respective two or more partition walls and/or between at least one of the two or more partition walls and the fourth plate so as not to overlap the two or more partition walls.

5. The electrode coating apparatus according to claim 4, wherein an upper end of each of the two or more partition walls is spaced apart from the fifth plate by a predetermined distance.

6. The electrode coating apparatus according to claim 4, wherein a front surface of each of the two or more partition walls is spaced apart from the second plate by a predetermined distance.

7. The electrode coating apparatus according to claim 3, wherein the fifth plate comprises:
a 5a plate connecting the second plate to the pair of fourth plates; and
a 5b plate connected to the 5a plate so as to be movable forward or rearward.

8. The electrode coating apparatus according to claim 1, wherein the second chamber has a box-shaped structure with an open top, and a discharge pipe on a bottom of the second chamber is configured to discharge an active material.

9. The electrode coating apparatus according to claim 8, wherein the second chamber comprises a 2a chamber and a 2b chamber, a bottom surface of each of the 2a chamber and the 2b chamber being inclined.

10. The electrode coating apparatus according to claim 9, wherein the discharge pipe comprises a 2a discharge pipe in the 2a chamber and a 2b discharge pipe in the 2b chamber, each of the 2a discharge pipe and the 2b discharge pipe being at a lowest position of the bottom surface of a corresponding one of the 2a chamber and the 2b chamber.

11. The electrode coating apparatus according to claim 3, further comprising:
an image capturing unit located in the vicinity of the roller, the image capturing unit being configured to capture an image of one surface of the electrode current collector that has passed through the slurry spraying unit; and
a controller configured to adjust the negative pressure in the vacuum chamber based on information received from the image capturing unit.

12. The electrode coating apparatus according to claim 11, wherein
the pressure reducing member comprises a suction member configured to generate the negative pressure and a valve between the suction member and the exhaust pipe, and
the controller is configured to adjust at least one of an output of the suction member and an opening and closing angle of the valve.

13. An electrode coating method of coating an electrode current collector using the electrode coating apparatus according to any one of claims 1 to 12, the electrode coating method comprising:
(S1) forming a predetermined level of negative pressure in the first chamber;
(S2) spraying an active material to one surface of the electrode current collector to form a coating layer;
(S3) capturing an image of the coating layer formed on the electrode current collector; and
(S4) transmitting information from the image capturing unit to the controller.

14. The electrode coating method according to claim 13, further comprising (S5) adjusting the negative pressure in the first chamber based on the information transmitted from the image capturing unit.

15. The electrode coating method according to claim 14, wherein the information in step (S5) is information of an inclined portion forming the coating layer.
